# EUROPEAN PATENT APPLICATION

(11) **EP 4 279 471 A1**
(43) Date of publication of application: **22.11.2023**
(21) Application number: 22305751.4
(22) Date of filing: 20.05.2022
(51) Int. Cl.: C04B 40/06, C04B 28/02, C04B 18/10

(54) **DRY MORTAR COMPOSITION**

(71) Applicant: Saint-Gobain Weber France, 94370 Sucy en Brie (FR)
(72) Inventor: CARDOSO DA SILVA, Luis, 3810-332 Aveiro (PT); YAMMINE-MALESYS, Joumana, 92400 Courbevoie (FR); GONZALO SANZ, David, 08030 Barcelona (ES); MARTY-BOUCHAR, Marie, 95880 Enghien-les-Bains (FR)
(74) Representative: Saint-Gobain Recherche

(57) **Abstract**

The invention relates to a dry mortar composition comprising 40 to 90wt% of aggregates and 10 to 60wt% of a mineral binder, with respect to the weight of dry mortar composition, said mineral binder comprising at least 60wt% of biomass ashes and 0-6wt% of cement with respect to the weight of mineral binder.

## Description

The present invention relates to a dry mortar composition.

A dry mortar composition is a pulverulent mixture comprising a hydraulic binder and aggregates. After mixing with water, it forms a paste, called wet mortar, that can be applied on various substrates before setting and hardening, finally forming a hardened mortar. Mortars can for example be used as renders, plasters, flooring compounds, masonry mortars, tile adhesives, grouts etc. or to make constructions elements by additive manufacturing.

The aim of the invention is especially to provide a mortar that can be used as a tile adhesive.

Tile adhesives must meet a number of requirements, both in terms of ease of use when laying tiles and in terms of the properties of the hardened mortar after laying. For example, EN 12004-1 Standard requires a tensile adhesion strength of at least 0.5 N/mm² (class C1 adhesive) or even at least 1 N/mm² (class C2 adhesive), even after immersion in water, heat or freezing-thawing. The open time, the maximum time between the bonding of the substrate and the laying of the tiles while maintaining an adhesion of at least 0.5 N/mm², must be at least 20 minutes, preferably at least 30 minutes for an extended open time adhesive - noted "E". The transverse deformation according to EN 12004 is preferably at least 2.5 mm (S1 deformability) or at least 5 mm (S2 deformability). Slip resistance is also an additional performance; an adhesive is noted "T" when it exhibits 0.5mm or less slip resistance, according to EN 12004. Setting and hardening time, workability, consistency of the wet mortar, and the effort required for application are also parameters to be taken into account.

A goal to be achieved is also related to the CO₂ footprint of the mortar. The hydraulic binder used in mortars for tile adhesives is often cement, especially Portland cement, the production of which requires huge amounts of energy and releases large amounts of CO₂ in the atmosphere. There is in consequence a need to provide mortar compositions that have a much lower CO₂ footprint while still meeting the requirements for tile adhesives.

These objectives are achieved by means of a dry mortar composition comprising 40 to 90wt% of aggregates and 10 to 60wt% of a mineral binder, said mineral binder comprising at least 60wt% of biomass ashes and 0-6wt% of cement. The amount of biomass ashes and cement in the mineral binder is calculated with respect to the (total) amount of mineral binder. The amount of aggregates and mineral binder in the dry mortar composition is calculated with respect to the (total) weight of dry mortar composition. As explained in further detail in the present specification, the mineral binder may especially comprise, in addition to biomass ashes, activators, retarders and/or accelerators.

Another object of the invention is a tile adhesive made by mixing this dry mortar composition with water to form a paste.

A further object of the invention is the use of the dry mortar composition as a tile adhesive. The term "tile adhesive" encompasses both the dry mortar composition itself and the paste (also called wet mortar) obtained by mixing the dry mortar composition with water.

Still another object of the invention is a method for adhering tiles on a substrate, comprising applying the abovementioned tile adhesive to said substrate, then applying said tiles to said substrate. This method then comprises mixing the dry mortar composition with water to form a paste, applying said paste to the substrate, then applying the tiles to the substrate.

The inventions have surprisingly shown that tile adhesives meeting the abovementioned requirements could be obtained by using very large amounts of biomass ashes, with a low amount or even no cement (especially no or little Portland cement). The CO₂ footprint of the mortar is therefore largely reduced. As described in more detail in the present specification, the inventors have especially shown that biomass ashes may in some cases be more reactive than cement itself.

### Mineral Binder

Biomass ashes are ashes formed during the combustion of biomass, used for example to produce electricity, steam or heat. Biomass may for example come from agricultural products, from forestry products, from domestic and municipal wastes, from the paper or pulp industry and/or from energy crops.

Preferably, biomass ashes comprise, or even consist of, ashes obtained from combustion of wastes (or residues or by-products) from the paper and pulp industry. These biomass ashes have shown a high or very high reactivity. For instance, such wastes can be produced during the production of paper or cardboard from recycled paper or cardboards. These wastes can for example be recovered during the pulping step, where water and chemicals such as hydrogen peroxide, sodium hydroxide and sodium silicate are added to shredded paper in order to separate the cellulose fibers, and/or during screening steps.

In other embodiments, biomass ashes comprise, or even consist of, ashes obtained from combustion of wood and residues from the pulp and paper industry. In other embodiments, the biomass ashes comprise, or even consist of, wood ashes. Wood ashes are generated during the combustion of wood and wood products. Wood ashes are especially obtained from the combustion of forestry residues, wastes (barks, sawdusts...), wood, wood residues or residues from the pulp or wood industries. The biomass may for example be produced during logging activities for the pulp or other wood-related industries and forest cleaning for wildfire prevention. For example, the biomass ashes may comprise, or even consist of, fly ashes obtained from combustion of wood, bark, forestry residues and/or wood residues. Wood is for example chosen from pine and eucalyptus. Wood may also come from demolition works, or from household wood wastes.

Whatever the source of biomass, combustion is preferably carried out by fluidized bed combustion, especially by bubbling fluidized bed combustion. Other combustion processes are fixed bed combustion or circulating fluidized bed combustion.

Whatever the combustion process, the biomass ashes used in the present invention are preferably recovered from the flue gases (for example by filtration), as opposed to the bottom ashes, which are recovered from the bottom of the boiler. Bottom ashes indeed often contain undesired materials such as heavy metals.

The inventors have realized that biomass ashes may have very different reactivities depending on their chemical and mineralogical composition, which especially depend from the type of biomass and from the combustion technology. For example, a high temperature (at least 700 or 800°C) makes it possible to obtain interesting mineralogical phases, especially when the time of residence of biomass in the boiler is long. Some biomass ashes show a very high reactivity (such as those obtained from combustion of wastes from the paper and pulp industry), which makes it possible to reduce the amount of cement to very low values, or even to use no cement at all. Surprisingly, some biomass ashes have shown even higher reactivities than Portland cement.

The biomass ashes preferably comprise, and even consist of, biomass ashes having an average chemical composition comprising 5-35wt%, especially 10-30wt% SiO₂, 3-20wt%, especially 5-15wt% Al₂O₃, 0-5wt%, especially 0.5-3wt% Fe₂O₃ and 30-70wt%, especially 40-60wt% CaO. Such biomass ashes are very reactive, and will be called "highly reactive biomass ashes" in the present text. The biomass ashes of the dry mortar composition preferably comprise at least 60wt%, especially at least 70wt%, even at least 80wt% or at least 90wt%, or 100wt% of such highly reactive biomass ashes, with respect to the total weight of biomass ashes. Examples of these highly reactive biomass ashes are those obtained from combustion of wastes (or residues or by-products) from the paper and pulp industry, especially when they are burned at high temperatures (above 700 or 800°C).

Other, less reactive, biomass ashes have an average chemical composition comprising 40-55wt% SiO₂, 5-12wt% Al₂O₃, 1-7wt% Fe₂O₃, 6-23wt% CaO and 1-7wt% K₂O. Such a composition especially comprises 45-52wt% SiO₂, 8-10wt% Al₂O₃, 2-5wt% Fe₂O₃, 8-20wt% CaO and 2-5wt% K₂O. Such biomass ashes will be called "moderately reactive biomass ashes" in the present text. The amount of moderately reactive biomass ashes is preferably less than 40wt%, especially less than 30wt% or less than 20wt%, even less than 10wt% or 0%, with respect to the total weight of biomass ashes. Examples of these moderately reactive biomass ashes are some wood ashes.

The loss on ignition of the biomass ashes is preferably less than 10wt%, especially less than 5wt%, even less than 1wt%.

The biomass ashes may be a mixture of different biomass ashes. Especially, the biomass ashes may be a mixture of highly reactive and moderately reactive biomass ashes, as defined before, in order for example to adjust the setting and hardening characteristics of the mortar. Preferably, the weight ratio between highly reactive and moderately reactive biomass ashes is at least 60:40, especially at least 70:30, even at least 80:20 or at least 90:10. As said before, the biomass ashes may consist of highly reactive biomass ashes.

The biomass ashes preferably comprise at least 10wt% of hydraulic phases, more preferably at least 15wt%, or even at least 20wt% of hydraulic phases, with respect to the total weight of biomass ashes. This amount is still more preferably 25wt% and more, or even 30wt% and more. This amount is advantageously below 60wt%, even below 50wt%. Hydraulic phases are preferably selected from calcium silicates, calcium aluminates, free lime (CaO) and mixtures thereof. Calcium silicates and calcium aluminates preferably comprise one or more of the following phases: C2S, C3S, C3A, C4AF, C2A2S, CA, C12A7 and CA2. The biomass ashes preferably comprise at least 10wt% of C2S phases, at least 5wt% of C2A2S phases and at least 1wt% of C3A phases, with respect to the total weight of biomass ashes. The amount of C3S phases is preferably 1wt% or less, or even 0%, because it inhibits the formation of aluminate phases during hydration. The amount of free lime in the biomass ashes is preferably at least 5wt%, even at least 10wt%, for example 5-18wt%.

The biomass ashes may also contain amorphous phases, especially containing CaO, Al₂O₃ and SiO₂, in amounts that make it possible for these elements to dissolve. The amount of amorphous phases is for example 10-25wt%.

The biomass ashes may contain free (metallic) aluminum. The amount of such component is however preferably 3wt% or less, with respect to the total weight of biomass ashes, because it may cause the mortar to expand during hardening, decreasing the adhesion values of the mortar, especially after immersion in water. In some embodiments, the amount of free aluminum is 1wt% or less, or even 0.

The biomass ashes may contain additional reactive phases, such as carbonates (especially calcite), sulfates (especially calcium sulfates such as anhydrite) or aluminosilicates (for example microcline). The amount of calcite is preferably 10-40wt%, with respect to the total weight of biomass ashes.

All the mineralogical features detailed in the previous paragraphs are generally achieved by the highly reactive biomass ashes.

In terms of particle size, the D50 (based on volume distribution) of the biomass ashes is preferably 8-50 pm, especially 10-30 µm, for example around 15 um. The maximum size (Dmax) is preferably 200 µm or less. These dimensions are typically measured by laser granulometry.

The (total) amount of biomass ashes in the mineral binder is preferably 65-100wt%, especially 70-95wt%, even 75-90wt% (with respect to the weight of mineral binder). In some embodiments, it can be 100wt%. The (total) amount of biomass ashes in the dry mortar composition is preferably 8-60wt%, especially 10-50wt%, even 20-40wt% (especially in case of tile adhesives), with respect to the weight of dry mortar composition.

Preferably, the mineral binder comprises, in addition to biomass ashes, activators (such as lime, slags, sources of calcium sulfate and/or optionally cement) as well as retarders and/or accelerators, i.e. compounds that affect, play a role or participate in the hydration reactions of biomass ashes. These compounds are therefore part of the mineral binder, and their amount is to be taken into account to calculate the weight of mineral binder. On the other hand, the other components of the dry mortar, mainly aggregates and optional additives, that do not affect the hydration of biomass ashes, and that will be described in more detail in the remainder of the text, are not part of the mineral binder. The use of the plural in "activators", "retarders" or "accelerators" does not impose the simultaneous presence of several activators, retarders or accelerators.

The mineral binder may further comprise activators, preferably selected from cement, lime, sources of calcium sulfate, slags, metakaolin, silica fume, pozzolana, fly ashes from coal combustion or from oil shale combustion and mixtures thereof. In what follows, all amounts are given with respect to the total amount of mineral binder.

Due to the high CO₂ footprint of cement, the amount of cement in the mineral binder is preferably 0-5wt%, even 0-4wt%, more preferably 0-3wt% or 0-2wt% with respect to the total amount of mineral binder. The amount of cement can be 0-1wt%, or can be 0 (i.e. the mineral binder, and therefore the dry mortar composition, is devoid of cement).

When present, the cement is especially selected from Portland cement, Calcium Aluminate Cements, Calcium sulfoaluminate cements and mixtures thereof.

The cement can consist of one type of cement. Alternatively, the cement can be a mixture of several types of cements. In the latter case, the term "cement" encompasses all the cements comprised in the composition, and the amount of cement (also called "total amount of cement") is the sum of the respective amounts of each and every particular cement comprised in the composition, i.e. the total amount of all cements comprised in the composition.

When present, the cement most preferably comprises a CEM I cement according to the EN 197-1 Standard, also called Ordinary Portland cement. The cement preferably consists of (or in other words is) a CEM I cement according to the EN 197-1 Standard. CEM I 42.5 or CEM I 52.5 are especially preferred.

The weight ratio of biomass ashes to cement is preferably 90:10 to 100:0. According to a preferred embodiment, this weight ratio is especially 92:8 and more, even 95:5 and more. According to another preferred embodiment, this weight ratio is 98:2 and more, or even 99:1 and more. It can be 100:0, when the mineral binder is devoid of cement. The weight ratio of biomass ashes to cement is calculated by dividing the total amount by weight of biomass ashes by the total amount by weight of cement.

Calcium sulfate has shown to regulate the reactivity of the biomass ashes. The total amount of a source of calcium sulfate in the mineral binder is preferably 2-15wt%, especially 5-10wt%, with respect to the weight of mineral binder. The source of calcium sulfate is preferably selected from gypsum, anhydrite, semi-hydrate and mixtures thereof. Mixtures of anhydrite and semi-hydrate are especially preferred.

The mineral binder advantageously comprises lime, especially in an amount of 0.1-0.5wt% with respect to the total weight of mineral binder.

The mineral binder may also comprise sodium sulfate, especially in an amount of 0.1-3wt%, preferably 0.5-2wt% with respect to the weight of mineral binder. Sodium sulfate makes it possible to activate the biomass ashes and to support formation of ettringite.

The total amount of slag is preferably 0.5-15wt%, especially 1-10wt%. The slag is preferably selected from blast furnaces slags, basic oxygen furnace slags, electric arc furnace slags, ladle slags, high alumina slags and mixtures thereof. High alumina slags are preferably derived from the recycling, by complete melting, of catalysts used for the desulfurization of petroleum products, in particular of catalysts based on molybdenum and/or cobalt. Other high alumina slags from pyrometallurgy may also be used. The presence of slag makes it possible to increase adhesion after water immersion and in freeze-thaw curing conditions.

The mineral binder preferably comprises inorganic oxidizing salts, in order to decrease the expansion of the binder during hardening. This is especially interesting when the biomass ashes contain free aluminum. The inorganic oxidizing salts are preferably selected from nitrates, carbonates and permanganates. The counter-ion is preferably an alkali metal. Lithium is especially preferred because it also improves the hardening of the binder. Examples of inorganic oxidizing salts are lithium nitrate, lithium carbonate, potassium nitrate and potassium permanganate. Lithium nitrate is especially preferred. The amount of inorganic oxidizing salts, especially of lithium nitrate, in the mineral binder is preferably 0.1 to 2.0wt%, especially 0.5 to 1.0wt%, with respect to the weight of mineral binder.

The mineral binder preferably further comprise at least an accelerator and/or at least a retarder, in order to regulate the setting and/or hardening time, as well as to reduce the expansion of the mineral binder.

Preferably, especially for the highly reactive biomass ashes, the mineral binder comprises at least a retarder. Retarders make it possible to retard the formation of Aft, AFm and C-S-H phases, allowing to increase the open time. In addition, retarders contribute to increase the Aft/AFm ratio, which results in a better dimensional stability. Preferred retarders are carboxylic acids or their salts, such as tartaric or citric acids or their salts, and mixtures thereof. A combination of tartaric acid and citric acid is especially preferred. The total amount of retarders is preferably 0.01 to 1.0wt%, especially 0.05 to 0.5wt%, with respect to the weight of mineral binder.

Accelerators are for example alkali salts, such as lithium (or potassium) sulfates or carbonates, or organic salts such as calcium formate. When present, the total amount of accelerators is preferably 0.1 to 3.0wt%, especially 0.2 to 2.0wt%, with respect to the weight of mineral binder.

### Aggregates

The aggregates are preferably selected from siliceous, calcareous aggregates, dolomitic aggregates and mixtures thereof. Examples are ground limestone or dolomite and silica sand. The aggregates preferably comprise sands (size 0-5 mm), and possibly fillers (size 0-0.1 mm). The aggregates preferably comprise (or even consist of) silica sand. A mixture of silica sand and limestone is also possible. Alternatively, or cumulatively, the aggregates may comprise lightweight aggregates, i.e. aggregates having an apparent density of at most 600 kg/m³, such as hydrophobic expanded perlite, thermosetting polymer powder (for example micronized rubber powder), hollow silicate particles (for example expanded glass beads and/or cenospheres) and mixtures thereof. When the mortar is used as a tile adhesive, the maximum size of the aggregates is preferably 2 mm, even 1 mm.

The total amount of aggregates preferably ranges from 50 to 85wt%, especially from 55 to 80wt%, even from 60 to 75wt%.

The average diameter (D50) of the aggregates, based on a volume distribution, is preferably 0.20 mm or less, especially 0.15 mm and less, even 0.10 mm and less.

### Additives

The dry mortar composition further preferably comprises one or more additive chosen from redispersible polymer powders, pigments, defoamers, stabilizers, thickeners, water-retention agents, shrinkage-reducing agents, hydrophobic agents, plasticizers and superplasticizers. The total amount of such additives, with respect to the weight of dry mortar composition is preferably 0.1 to 8.0wt%, especially 0.5 to 3.0wt%.

The dry mortar composition more preferably comprises redispersible polymer powders and water-retention agents.

Thickeners and water-retention agents are for example cellulose ethers and/or starch ethers. Their total amount is preferably 0.1 to 1.0wt%, especially 0.2 to 0.6wt%. These additives make it possible to improve the workability of the paste.

The redispersible polymer powder preferably comprises at least a polymer based on one or more monomers selected from the group including vinyl esters (especially vinyl esters of unbranched or branched alkylcarboxylic acids having from 1 to 15 carbon atoms), methacrylates and acrylates (especially (meth)acrylates of alcohols having from 1 to 10 carbon atoms), methacrylic acid, acrylic acid, vinyl aromatics, olefins (such as ethylene or propylene), dienes and vinyl halides. Particularly preferred polymers are copolymers of at least two of the abovementioned monomers, especially vinyl acetate-ethylene copolymers, vinyl ester-ethylene-vinyl chloride copolymers vinyl acetate copolymers, vinyl acetate-acrylate copolymers, copolymers of methyl methacrylate with n-butyl acrylate and/or 2-ethylhexyl acrylate, copolymers of methyl methacrylate with 1,3-butadiene, vinyl chloride-ethylene copolymers, vinyl chloride-acrylate copolymers, styrenebutadiene copolymers, styrene-acrylate copolymers, vinyl acetate-(meth)acrylic acid-ethylene terpolymers. The amount of redispersible polymer powder is preferably 0.2 to 8.0wt%, especially 0.5 to 6.0wt%, even 1.0 to 5.0wt%. The glass transition temperature (Tg) of the polymer is preferably 5-20°C.

The ratio of water to the dry mortar composition ("water ratio") preferably ranges from 0.15 to 0.40 by weight, in order to get the right consistency for the paste (wet mortar). This corresponds to a water dosage of 15 to 40% (added to 100% of dry mortar).

The paste formed by mixing the dry mortar composition with water is applied on the substrate by the usual techniques.

The substrate is typically a wall or a partition, or a floor, for example a screed.

The tiles or slabs of the tiling may be of various materials, such as ceramic, sandstone, cement, stone, marble, etc. The wet mortar (adhesive) may be applied to the substrate, and possibly also to the tiles or slabs, by means of a glue comb, a hawk, a float, a trowel or a notched trowel.

The tile adhesive is preferably classified as C1, C2 or C2S according to the EN 12004-1:2017 Standard.

Other applications of the dry mortar composition are possible, for example for façade renders or plasters, flooring compounds (such as screeds) or tile grouts. It may also be used in a 3D-printing process for manufacturing construction elements, such as walls.

### Examples

The following examples illustrate the invention in a non-limitative way.

Dry mortar compositions to be used as tile adhesives have been obtained by mixing different ingredients. The following table shows the compositions (amounts in wt% with respect to the weight of dry mortar composition) and some measured properties for the examples according to the invention (1 to 4).

Biomass ashes were obtained from combustion of wastes from the paper and pulp industry and were provided by SAICA, Spain. Their chemical composition comprised 10-30wt% SiO₂, 5-15wt% Al₂O₃, 0.5-3wt% Fe₂O₃ and 40-60wt% CaO. In terms of mineralogical composition, the ashes especially contained 34wt% of calcite, 8wt% of lime, 15wt% of larnite (C2S), 6wt% of gehlenite (C2A2S), 2wt% of tricalcium aluminate (C3A), 3wt% of other hydraulic phases, 1wt% of anhydrite, 2wt% of free aluminum and 19wt% of amorphous phases. Their D50 (based on volume distribution) was 14 µm and their D90 was 51 pm.

The cement, named "OPC" in the table, was a CEM I 42.5 Portland Cement. The slag was a ground granulated high alumina slag derived from the recycling, by complete melting, of catalysts based on molybdenum and/or cobalt. The calcium sulfate was a mixture of anhydrite and semi-hydrate. Cellulose ether was a hydroxyethyl methylcellulose, having a viscosity between 20000 and 40000 mPas (after addition of water). The "resin" was a redispersible powder which is an EVA copolymer, having a Tg of 16°C.

For each example, the tables show the results in terms of setting time at 22°C, tensile adhesion strength in different conditions (measured according to EN 12004-2 Standard), as well as after 20 minutes' open time, and qualitative evaluation of expansion and workability.

**[Table 1]**

| | | 1 | 2 | 3 | 4 |
|---|---|---|---|---|---|
| *Binder* | | | | | |
| Biomass ashes | | 30 | 30 | 30 | 30 |
| OPC | | 0.89 | 0.89 | 0.89 | 0.89 |
| Lime | | 0.1 | 0.1 | 0.1 | 0.1 |
| Calcium sulfate | | 3.0 | 3.0 | 3.0 | 3.0 |
| Sodium sulfate | | 0.5 | 0.5 | 0.5 | 0.5 |
| Slag | | 3.0 | 3.0 | 0 | 3.0 |
| Tartaric acid | | 0.15 | 0.41 | 0.15 | 0.15 |
| Citric acid | | | 0.26 | | |
| Lithium nitrate | | | | 0.5 | 0.5 |
| | | | | | |

| *Aggregates* | | | | | |
|---|---|---|---|---|---|
| Silica sand | | 59.06 | 59.06 | 59.06 | 159.06 |
| | | | | | |

| *Additives* | | | | | |
|---|---|---|---|---|---|
| Cellulose ether | | 0.3 | 0.3 | 0.3 | 0.3 |
| Resin | | 3.0 | 3.0 | 3.0 | 3.0 |
| | | | | | |
| Water dosage (%) | | 26 | 28 | 28 | 28 |
| | | | | | |
| Setting time (h) | | 8 | 15-24 | <7 | <7 |
| Workability | | Good | Good | Good | Good |
| Expansion | | Low | Very low | No | No |
| Adhesion | | 0.94 | 1.29 | 1.49 | 1.40 |
| | After water immersion | 0.48 | 0.64 | 0.74 | 0.89 |
| | After freeze-thaw | 0.65 | 0.62 | 0.6 | 0.85 |
| | After heat storage | 0.90 | 0.67 | 0.70 | 0.52 |
| | After 20 min | 0.65 | 0.78 | 0.64 | 0.61 |

## Claims

1. A dry mortar composition comprising 40 to 90wt% of aggregates and 10 to 60wt% of a mineral binder, with respect to the weight of dry mortar composition, said mineral binder comprising at least 60wt% of biomass ashes and 0-6wt% of cement with respect to the weight of mineral binder.

2. The dry mortar composition as claimed in Claim 1, wherein the biomass ashes comprise ashes obtained from combustion of wastes from the paper and pulp industry.

3. The dry mortar composition as claimed in any one of the preceding Claims, wherein the biomass ashes comprise biomass ashes having an average chemical composition comprising 5-35wt% SiO₂, 3-20wt% Al₂O₃, 0-5wt% Fe₂O₃ and 30-70wt% CaO.

4. The dry mortar composition as claimed in any one of the preceding Claims, wherein the biomass ashes comprise at least 10wt%, preferably at least 20wt%, of hydraulic phases, with respect to the total weight of biomass ashes.

5. The dry mortar composition as claimed in the preceding Claim, wherein the hydraulic phases are selected from calcium silicates, calcium aluminates, free lime (CaO) and mixtures thereof.

6. The dry mortar composition as claimed in the preceding Claim, wherein calcium silicates and calcium aluminates comprise one or more of the following phases: C2S, C3S, C3A, C4AF, C2A2S, CA, C12A7 and CA2.

7. The dry mortar composition as claimed in any one of the preceding Claims, wherein the amount of biomass ashes in the mineral binder is 65-100wt%, especially 70-95wt%, with respect to the weight of mineral binder.

8. The dry mortar composition as claimed in any one of the preceding Claims, wherein the mineral binder comprises, in addition to biomass ashes, activators as well as retarders and/or accelerators.

9. The dry mortar composition as claimed in the preceding Claim, wherein the activators are selected from lime, sources of calcium sulfate, slags, metakaolin, silica fume, pozzolana, fly ashes from coal combustion or from oil shale combustion and mixtures thereof.

10. The dry mortar composition as claimed in any one of the preceding Claims, wherein the amount of cement in the mineral binder is 0-4wt%, preferably 0-1wt% with respect to the total amount of mineral binder.

11. The dry mortar composition as claimed in any one of the preceding Claims, wherein the mineral binder comprises inorganic oxidizing salts, especially selected from nitrates, carbonates and permanganates, of an alkali metal.

12. The dry mortar composition as claimed in any one of the preceding Claims, wherein the aggregates are selected from siliceous, calcareous aggregates, dolomitic aggregates and mixtures thereof.

13. The dry mortar composition as claimed in any one of the preceding Claims, comprising one or more additive chosen from redispersible polymer powders, pigments, defoamers, stabilizers, thickeners, shrinkage-reducing agents, hydrophobic agents, plasticizers and superplasticizers.

14. A tile adhesive made by mixing the dry mortar composition as claimed in any one the preceding Claims with water to form a paste.

15. A method for adhering tiles on a substrate, comprising mixing the dry mortar composition according to any one of Claims 1 to 13 with water to form a paste, applying said paste to said substrate, then applying the tiles to said substrate.

16. A use of the dry mortar composition according to any one of Claims 1 to 13 as a tile adhesive.
